# EUROPEAN PATENT SPECIFICATION

(11) **EP 2 987 886 B1**
(45) Date of publication and mention of the grant of the patent: **06.06.2018**
(21) Application number: 14785248.7
(22) Date of filing: 11.03.2014
(51) Int. Cl.: C22C 38/00, B21B 3/00, C21D 8/02, C21D 9/46, C22C 38/14, C22C 38/58, C21D 6/00, C22C 38/02, C22C 38/04, C22C 38/06, C22C 38/12, C22C 38/16, C22C 38/46, C22C 38/50

(54) **HIGH STRENGTH HOT ROLLED STEEL SHEET AND METHOD FOR PRODUCING SAME**
HOCHFESTES HEISSGEWALZTES STAHLBLECH UND VERFAHREN ZUR HERSTELLUNG DAVON
TÔLE D'ACIER LAMINÉE À CHAUD DE HAUTE RÉSISTANCE ET SON PROCÉDÉ DE PRODUCTION

(30) Priority: 15.04.2013 JP 2013084449
(43) Date of publication of application: 24.02.2016
(73) Proprietor: JFE Steel Corporation, Tokyo 100-0011 (JP)
(72) Inventor: YAMAZAKI, Kazuhiko, Tokyo 100-0011 (JP); NAKAJIMA, Katsumi, Tokyo 100-0011 (JP); KAMI, Chikara, Tokyo 100-0011 (JP)
(74) Representative: Grünecker Patent- und Rechtsanwälte PartG mbB
(86) International application number: PCT/JP2014/001380
(87) International publication number: WO 2014/171057

(56) References cited:
- EP-A1- 1 790 737
- EP-A1- 2 014 781
- WO-A1-2012/036309
- JP-A- 2003 321 727
- JP-A- 2007 009 322
- JP-A- 2007 162 076
- JP-A- 2009 057 620
- JP-A- 2010 043 323
- JP-A- 2010 095 753
- JP-A- 2011 202 192
- JP-A- 2012 062 557
- JP-A- 2012 062 558
- JP-A- 2014 025 131

## Description

### Technical Field

The present invention relates to a high-strength hot-rolled steel sheet having a tensile strength of 980 MPa or more which can be preferably used as a material for the structural parts and skeleton members of automobiles or the frames of trucks and, in particular, relates to the improvement of bending workability.

### Background Art

Nowadays, automobile exhaust gas regulations are being strengthened from the viewpoint of global environment conservation. In such a situation, since the improvement of the fuel efficiency of automobiles such as trucks is an important problem to be solved, there is a growing demand for the strengthening and thickness reduction of materials used for automobiles. Therefore, there is a tendency toward actively using high-strength hot-rolled steel sheets as materials for automotive parts, and demands for high-strength hot-rolled steel sheets are increasing year by year. In particular, a high-strength hot-rolled steel sheet having a tensile strength of 980 MPa or more is highly anticipated to serve as a material which significantly improves the fuel efficiency of automobiles.

Generally, however, an increase in the strength of a steel sheet is accompanied by a decrease in bending workability. Therefore, various investigations have been conducted in order to give bending workability required for a material for automotive parts to a high-strength hot-rolled steel sheet.

For example, Patent Literature 1 proposes a technology for manufacturing a hot-rolled steel sheet, the technology including heating and holding a steel material having a chemical composition containing, by mass%, C: 0.05% to 0.15%, Si: 0.2% to 1.2%, Mn; 1.0% to 2.0%, P: 0.04% or less, S: 0.0030% or less, Al: 0.005% to 0.10%, N: 0.005% or less, Ti: 0.03% to 0.13%, and the balance being Fe and inevitable impurities at a temperature of 1200°C to 1350°C for 1200 seconds or more, then hot-rolling the heated material under the conditions that the finishing temperature of rough rolling is 1050°C or higher and the finishing temperature of finish rolling is 830°C to 930°C, and thereafter cooling the hot-rolled steel sheet at an average cooling rate of 35°C/s or more to a coiling temperature of 350°C to 550°C.

According to the technology proposed in Patent Literature 1, it is possible to obtain a hot-rolled steel sheet having a microstructure including, in terms of area fraction, less than 80% of a bainite phase and 10% or more of a ferrite phase having a grain diameter of 2 to 15 µm in surface regions which are respectively within 1.5 to 3.0% of the whole thickness of the steel sheet from both surfaces of the steel sheet and including, in terms of area fraction, more than 95% of a bainite phase in an inner region which is a region other than the surface regions. According to the technique proposed in Patent Literature 1, by forming the soft microstructure described above in the surface regions, it is possible to obtain a high-strength hot-rolled steel sheet excellent in bending workability having a tensile strength of 780 MPa or more.

Patent Literature 2 proposes a technology for manufacturing a hot-rolled steel sheet, the technique including heating a steel slab having a chemical composition containing, by mass%, C: 0.05% to 0.19%, Si: 0.05% to 1.0%, Mn: 0.3% to 2.5%, P: 0.03% or less, S: 0.025% or less, Ti: 0.005% to 0.1%, Cr: 0.03% to 1.0%, Sol.Al: 0.005% to 0.1%, N: 0.0005% to 0.01%, B: 0.0001% to 0.01%, and the balance being Fe and inevitable impurities, in which the relationship 3C ≤ 0.27Mn + 0.2Cr + 0.05Cu + 0.11Ni + 0.25Mo ≤ 3C + 0.3 (C, Mn, Cr, Cu, Ni, Mo are represented in units of mass%), at a temperature of 1070°C or higher and 1300°C or lower, then hot-rolling the heated slab under the condition that the finishing temperature is 850°C or higher and 1070°C or lower, and thereafter cooling the hot-rolled steel sheet to a temperature of 300°C or lower at a cooling rate V_{C} (°C/sec) which satisfies the relationship 1.2/C ≤ V_{C} ≤ 1.8/C (C is represented in units of mass%).

According to the technology proposed in Patent Literature 2, it is possible to obtain a hot-rolled steel sheet composed of a surface layer thereof having a microstructure including, in terms of area fraction, 80% or more of a bainite phase, a Vickers hardness Hv of 210 or more and 300 or less, an average value of the lengths of the major axis of bainite grains of 5 µm or less, and an average grain boundary carbide diameter of 0.5 µm or less. According to the technology proposed in Patent Literature 2, it is possible to obtain a hot-rolled steel sheet for a steel pipe used for a machinery structure excellent in terms of fatigue resistance and bending workability by controlling a microstructure in the surface layer of the steel sheet to be uniform and fine and to include mainly a bainite structure so as to have an intermediate hardness and by decreasing the size of grain boundary precipitated carbides.

### Citation List

### Patent Literature

PTL 1: Japanese Unexamined Patent Application Publication No. 2012-062558
PTL 2: Japanese Unexamined Patent Application Publication No. 2009-270142

### Summary of Invention

### Technical Problem

However, in the case of the technology proposed in Patent Literature 1, since it is not always possible to obtain a high-strength hot-rolled steel sheet having a tensile strength of 980 MPa or more, there is room for improvement.

In the case of the technology proposed in Patent Literature 2, since the microstructure of a steel sheet is controlled by setting a cooling stop temperature to be 300°C or lower and by adjusting mainly a cooling rate, there is a case where it is difficult to stably achieve the desired microstructure of a steel sheet due to a variation in cooling rate in mass production. Moreover, in the case of the technique proposed in Patent Literature 2, since the cooling stop temperature is set to be 300°C or lower, there is a tendency for a hard microstructure to be formed in the surface regions of a steel sheet, which results in a case where it is not possible to provide a hot-rolled steel sheet with sufficient bending workability.

To solve the problems with the related art technology described above, it is an object of the present invention to provide a high-strength hot-rolled steel sheet having a high tensile strength of 980 MPa or more and excellent bending workability which has, in particular, a thickness of 3.2 mm or more and 14 mm or less and a method for manufacturing the steel sheet.

### Solution to Problem

The present inventors, in order to achieve the object described above, diligently conducted investigations for the purpose of increasing the bending workability of a hot-rolled steel sheet while maintaining a high strength of 980 MPa or more in terms of tensile strength TS, and as a result, found that it is very effective to form a microstructure including mainly a ferrite phase in the surface regions of a hot-rolled steel sheet and a microstructure including mainly a bainite phase in the region other than the surface regions (inner region) of the hot-rolled steel sheet in order to achieve a satisfactory strength-bending workability balance of the hot-rolled steel sheet. In addition, from the results of further investigations, it was found that there is a significant increase in the bending workability of a hot-rolled steel sheet while maintaining a high strength TS of 980 MPa or more in terms of tensile strength by optimizing the area fraction of a ferrite phase in surface regions and a bainite phase in an inner region and by optimizing the proportions of surface regions in the thickness direction of a steel sheet.

The present inventors conducted investigations regarding a method for forming the desired microstructure for a hot-rolled steel sheet described above, that is, a method for forming a microstructure including mainly a bainite phase with a specified amount of ferrite phase being formed in surface regions of the hot-rolled steel sheet. As a result of investigations, the present inventors conceived heating a steel material at a temperature of 1250°C or higher and holding the heated steel material at the heating temperature for 3600 seconds or more in the case where a hot-rolled steel sheet is manufactured by heating steel material with a specified chemical composition and then by hot-rolling the heated steel material.

In the case where a steel material is held in a high temperature range for a long time, the surface of the steel material is decarburized. In addition, the lower the C content of steel, the more the ferrite phase is likely to be formed. Therefore, the present inventors conducted experiments for making the amount of a ferrite phase formed in the surface regions of a hot-rolled steel sheet larger than that in a region other than the surface regions of the hot-rolled steel sheet in cooling and coiling processes after hot rolling has been performed by using the decarburizing mentioned above in order to decarburize the surface regions of the steel material in a heating process of the steel material. As a result, it was clarified that, by heating a steel material at a temperature of 1250°C or higher and by holding the heated steel material at the heating temperature for 3600 seconds or more, it is possible to obtain a hot-rolled steel sheet having the desired microstructure after cooling and coiling have been performed after hot rolling has been performed. As described above, it was found that, by utilizing decarburization, it is possible to stably achieve the desired microstructure in the surface regions of a hot-rolled steel sheet.

The present invention has been completed on the basis of the knowledge described above and additional investigations. That is, the subject matter of the present invention is as follows.
[1] A high-strength hot-rolled steel sheet excellent in bending workability, the steel sheet consisting of:
   a chemical composition containing, by mass%, C: more than 0.1% and 0.2% or less, Si: 0.5% or more and 3.0% or less, Mn: 1.0% or more and 3.5% or less, P: 0.05% or less, S: 0.004% or less, Al: 0.10% or less, N: 0.008% or less, Ti: 0.05% or more and 0.15% or less, V: more than 0.10% and 0.30% or less,
   optionally at least one selected from the group consisting of Nb: 0.003% or more and 0.2% or less, B: 0.0002% or more and 0.0015% or less, Cu: 0.005% or more and 0.2% or less, Ni: 0.005% or more and 0.2% or less, Cr: 0.005% or more and 0.2% or less, Mo: 0.005% or more and 0.2% or less, Ca: 0.0002% or more and 0.01% or less and REM: 0.0002% or more and 0.01% or less,
   and the balance being Fe and inevitable impurities, surface regions including mainly a ferrite phase, and an inner region including mainly a bainite phase,
   the surface regions having a microstructure including mainly a ferrite phase in an amount of 80% or more in terms of area fraction and the balance being at least one selected from among a bainite phase, a martensite phase, and a retained austenite phase in an amount of 0% or more and 20% or less in terms of area fraction,
   the inner region having a microstructure including mainly a bainite phase in an amount of more than 90% in terms of area fraction and the balance being at least one selected from among a ferrite phase, a martensite phase, and a retained austenite phase in an amount of 0% or more and less than 10% in terms of area fraction, and
   the proportions of the surface regions in the thickness direction of the steel sheet being 1.0% or more and 5.0% or less of the whole thickness respectively from the upper and lower surfaces of the steel sheet, and has a tensile strength of 980 MPa or more.
[2] A method for manufacturing a high-strength hot-rolled steel sheet excellent in bending workability, the method including:
   heating a steel slab having the chemical composition according to item [1] in a temperature range of 1250°C or higher,
   holding the heated steel slab in the temperature range for 3600 seconds or more,
   performing hot rolling including rough rolling and finish rolling under the condition that the finish delivery temperature is 840°C or higher and 940°C or lower,
   starting cooling within 1.5 seconds after hot rolling has been performed,
   performing cooling at an average cooling rate of 25°C/s or more, and
   performing coiling at a coiling temperature of 350°C or higher and 500°C or lower.

### Advantageous Effects of Invention

According to the present invention, it is possible to obtain a high-strength hot-rolled steel sheet having a tensile strength of 980 MPa or more and excellent in bending workability. Therefore, in the case where the present invention is applied to the structural parts and skeleton members of automobiles, the frames of trucks, and the like, it is possible to reduce auto weight while maintaining automotive safety and it is possible to reduce environmental loads. In addition, according to the present invention, it is possible to stably manufacture a hot-rolled steel sheet having increased bending workability while maintaining a high strength of 980 MPa or more in terms of tensile strength, which has a marked effect on industry. Description of Embodiments

The present invention will be described in detail hereafter.

First, the reasons for the limitations on the chemical composition of the hot-rolled steel sheet according to the present invention will be described. Hereinafter, % used when describing a chemical composition always represents mass%, unless otherwise noted.

### C: more than 0.1% and 0.2% or less

C increases the strength of steel and promotes the formation of a bainite phase. Accordingly, it is necessary that the C content be more than 0.1% in the present invention. On the other hand, in the case where the C content is more than 0.2%, since it is difficult to control the formation of a bainite phase, there is an increase in the amount of a martensite phase, which is a hard phase, formed, resulting in a decrease in bending workability of the hot-rolled steel sheet. Therefore, the C content is set to be more than 0.1% and 0.2% or less, or preferably 0.12% or more and 0.18% or less.

### Si: 0.5% or more and 3.0% or less

Since Si suppresses the formation of large-size oxides and cementite, which decrease bending workability, and since Si facilitates the formation of a ferrite phase, which improves bending workability, it is effective to add Si in an amount of 0.5% or more. In addition, Si is a chemical element which contributes to solute strengthening. On the other hand, in the case where the Si content is more than 3.0%, since there is a significant decrease in the surface quality of a hot-rolled steel sheet, there is a decrease in phosphatability and corrosion resistance. Therefore, the Si content is set to be 0.5% or more and 3.0% or less, preferably 0.5% or more and 2.5% or less, more preferably 0.6% or more and 2.0% or less, or further more preferably 0.7% or more.

### Mn: 1.0% or more and 3.5% or less

Mn is one of the most important constituent chemical elements in the present invention. Mn is a chemical element which increases the strength of steel by forming a solid solution and which promotes the formation of a bainite phase through increasing hardenability. In order to realize such effects, it is necessary that the Mn content be 1.0% or more. Since Mn is a chemical element which tends to be concentrated in the central portion of a slab when slab casting is performed, it is possible to realize an increase in strength due to this concentration while keeping satisfactory bending workability for the surface regions of a hot-rolled steel sheet. On the other hand, in the case where the Mn content is more than 3.5%, since there is also an increase in the Mn concentration in the surface regions, there is a deterioration in bending workability of the hot-rolled steel sheet. Therefore, the Mn content is set to be 1.0% or more and 3.5% or less, preferably 1.5% or more and 3.0% or less, or more preferably more than 2.0% and 2.5% or less.

### P: 0.05% or less

Although P is a chemical element which contributes to an increase in the strength of steel by forming a solid solution, P is a chemical element which also causes a decrease in low-temperature toughness and workability as a result of being segregated at grain boundaries, in particular, at prior-austenite grain boundaries. Therefore, it is preferable that the P content be as small as possible, but it is acceptable that the P content be 0.05% or less. Therefore, the P content is set to be 0.05% or less. However, since it is not possible to realize an effect corresponding to an increase in the refining costs in the case where the P content is excessively decreased, it is preferable that the P content be 0.003% or more and 0.03% or less, or more preferably 0.005% or more and 0.02% or less.

S: 0.004% or less

S decreases the workability of a hot-rolled steel sheet as a result of combining with Ti and Mn to form large-size sulfides. Therefore, it is preferable that the S content be as small as possible, but it is acceptable that the S content be 0.004% or less. Therefore, the S content is set to be 0.004% or less. However, since it is not possible to realize an effect corresponding to an increase in the refining costs in the case where the S content is excessively decreased, it is preferable that the S content be 0.0003% or more and 0.004% or less.

### Al: 0.10% or less

Al is a chemical element which is effective for increasing the cleanness of steel by functioning as a deoxidizing agent. On the other hand, in the case where the Al content is excessively large, there is an increase in the amount of oxide inclusions, which results in a decrease in the toughness of a hot-rolled steel sheet and results in the occurrence of defects. Therefore, the Al content is set to be 0.10% or less, preferably 0.005% or more and 0.08% or less, or more preferably 0.01% or more and 0.05% or less.

### N: 0.008% or less

N contributes to make a crystal grain size fine by being precipitated as the (form of) nitrides combining with nitride-forming elements. However, since N tends to combine with Ti to form large-size nitrides at a high temperature, there is a decrease in the bending workability of a hot-rolled steel sheet. Therefore, it is preferable that the N content be as small as possible in the present invention. Therefore, in the present invention, the N content is set to be 0.008% or less, preferably 0.001% or more and 0.006% or less, or more preferably 0.002% or more and 0.005% or less.

### Ti: 0.05% or more and 0.15% or less

Ti is one of the most important constituent chemical elements in the present invention. Ti contributes to an increase in the strength of steel through making a crystal grain size fine as a result of forming carbonitrides and through precipitation strengthening. In addition, Ti has a role in improving the bending workability of a hot-rolled steel sheet by decreasing the amount of cementite in steel as a result of forming a large number of fine clusters of (Ti, V)C at a low temperature of 300°C or higher and 450°C or lower. In order to realize such effects, it is necessary that the Ti content be 0.05% or more. On the other hand, in the case where the Ti content is more than 0.15%, the effects described above become saturated. In addition, in the case where the Ti content is more than 0.15%, since large-size TiCs are left undissolved in steel when a slab is heated, there is a decrease in the bending workability of a hot-rolled steel sheet, and there is a decrease in the amount of solid solute C before bainite transformation occurs, which results in a decrease in the strength of a steel sheet. Therefore, the Ti content is set to be 0.05% or more and 0.15% or less, or preferably 0.08% or more and 0.13% or less.

### V: more than 0.10% and 0.30% or less

V is one of the most important constituent chemical elements in the present invention. V contributes to an increase in the strength of steel through making a crystal grain size fine as a result of forming carbonitrides and through precipitation strengthening. V increases hardenability, and V contributes to the formation of a bainite phase and to refine a bainite phase. V has a role in improving the bending workability of a hot-rolled steel sheet by decreasing the amount of cementite in steel as a result of forming a large number of fine clusters of (Ti, V)C at a low temperature of 300°C or higher and 450°C or lower. In order to realize such effects, it is necessary that the V content be more than 0.10%. On the other hand, in the case where the V content is more than 0.30%, there is a decrease in the ductility of a hot-rolled steel sheet, and there is an increase in cost. Therefore, the V content is set to be more than 0.10% and 0.30% or less, or preferably 0.15% or more and 0.25% or less.

Although the chemical composition described above is the basic chemical composition of the hot-rolled steel sheet according to the present invention, the hot-rolled steel sheet according to the present invention may contain, as needed, at least one selected from the group consisting of Nb: 0.003% or more and 0.2% or less, B: 0.0002% or more and 0.0015% or less, Cu: 0.005% or more and 0.2% or less, Ni: 0.005% or more and 0.2% or less, Cr: 0.005% or more and 0.2% or less, and Mo: 0.005% or more and 0.2% or less, for example, in order to increase hole expansion formability or in order to increase strength.

### Nb: 0.003% or more and 0.2% or less

Nb is a chemical element which contributes to an increase in the strength of steel through the formation of carbonitrides. In order to realize such an effect, it is preferable that the Nb content be 0.003% or more. On the other hand, in the case where the Nb content is more than 0.2%, since there is an increase in deformation resistance, there is an increase in rolling force in hot rolling when a hot-rolled steel sheet is manufactured, which results in concern that a rolling operation may be difficult to perform due to an excessive increase in the load placed on a rolling mill. In addition, in the case where the Nb content is more than 0.2%, there is a tendency for the workability of a hot-rolled steel sheet to decrease due to the formation of large-size precipitates. Therefore, it is preferable that the Nb content be 0.003% or more and 0.2% or less, more preferably 0.01% or more and 0.15% or less, or further more preferably 0.015% or more and 0.1% or less.

### B: 0.0002% or more and 0.0015% or less

B is a chemical element which inhibits the formation and growth of a ferrite phase as a result of being segregated at austenite grain boundaries. Also, B is a chemical element which contributes to improve hardenability and to forming a bainite phase and refining a bainite phase. In order to realize such effects, it is preferable that the B content be 0.0002% or more. However, in the case where the B content is more than 0.0015%, since the formation of a martensite phase is promoted, there is a possibility that there may be a significant deterioration in the bending workability of a hot-rolled steel sheet. Therefore, in the case where B is added, it is preferable that the B content be 0.0002% or more and 0.0015% or less, or more preferably 0.0004% or more and 0.0012% or less.

### Cu: 0.005% or more and 0.2% or less

Cu is a chemical element which contributes to an increase in the strength of steel by forming a solid solution. In addition, Cu is a chemical element which has a function of increasing hardenability, which, in particular, decreases the bainite transformation temperature, and which contributes to decreasing the grain size of a bainite phase. In order to realize such effects, it is preferable that the Cu content be 0.005% or more. However, in the case where the Cu content is more than 0.2%, there is a decrease in the surface quality of a hot-rolled steel sheet. Therefore, it is preferable that the Cu content be 0.005% or more and 0.2% or less, or more preferably 0.01% or more and 0.15% or less.

### Ni: 0.005% or more and 0.2% or less

Ni is a chemical element which contributes to an increase in the strength of steel by forming a solid solution. In addition, Ni has a function of increasing hardenability and facilitates the formation of a bainite phase. In order to realize such effects, it is preferable that the Ni content be 0.005% or more. However, in the case where the Ni content is more than 0.2%, since a martensite phase tends to be formed, there is a possibility that there may be a significant deterioration in the hole expansion formability of a hot-rolled steel sheet. Therefore, it is preferable that the Ni content be 0.005% or more and 0.2% or less, or more preferably 0.01% or more and 0.15% or less.

### Cr: 0.005% or more and 0.2% or less

Cr contributes to an increase in the strength of a hot-rolled steel sheet by forming carbides. In order to realize such an effect, it is preferable that the Cr content be 0.005% or more. On the other hand, in the case where the Cr content is more than 0.2%, there is concern that there may be a decrease in the corrosion resistance of a hot-rolled steel sheet. Therefore, it is preferable that the Cr content be 0.005% or more and 0.2% or less, or more preferably 0.01% or more and 0.15% or less.

### Mo: 0.005% or more and 0.2% or less

Mo contributes to an increase in the hole expansion formability and strength of a hot-rolled steel sheet by promoting the formation of a bainite phase through increasing hardenability. In order to realize such effects, it is preferable that the Mo content be 0.005% or more. However, in the case where the Mo content is more than 0.2%, since a martensite phase tends to be formed, there is a possibility that there may be a deterioration in the bending workability of a hot-rolled steel sheet. Therefore, it is preferable that the Mo content be 0.005% or more and 0.2% or less, or more preferably 0.01% or more and 0.15% or less.

In addition, the hot-rolled steel sheet according to the present invention may contain, as needed, at least one selected from the group consisting of Ca: 0.0002% or more and 0.01% or less and REM: 0.0002% or more and 0.01% or less.

### Ca: 0.0002% or more and 0.01% or less

Since Ca is a chemical element which controls the shape of sulfide inclusions, Ca is effective for increasing the bending workability of a hot-rolled steel sheet. In order to realize such an effect, it is preferable that the Ca content be 0.0002% or more. However, in the case where the Ca content is more than 0.01%, there is a possibilty that surface defects may occur in a hot-rolled steel sheet. Therefore, it is preferable that the Ca content be 0.0002% or more and 0.01% or less, or more preferably 0.0004% or more and 0.005% or less.

### REM: 0.0002% or more and 0.01% or less

Since REM, like Ca, controls the shape of sulfide inclusions, REM reduces the negative effect of sulfide inclusions on the bending workability of a hot-rolled steel sheet. In order to realize such an effect, it is preferable that REM content be 0.0002% or more. However, in the case where REM content is more than 0.01%, since there is a decrease in the cleanness of steel, there is a tendency for the hole expansion formability of a hot-rolled steel sheet to decrease. Therefore, in the case where REM is added, it is preferable that REM content be 0.0002% or more and 0.01% or less, or more preferably 0.0004% or more and 0.005% or less.

In the present invention, the balance other than the chemical elements described above includes Fe and inevitable impurities. Examples of the inevitable impurities include Sb, Sn, and Zn. It is acceptable that the contents of Sb, Sn, and Zn be respectively 0.01% or less, 0.1% or less, and 0.01% or less.

Hereafter, the reasons for the limitations on the microstructure of the hot-rolled steel sheet according to the present invention will be described.

The microstructure of the hot-rolled steel sheet according to the present invention has a structure that a microstructure in the surface layers placed on the upper and lower surface sides of the steel sheet (hereinafter, called surface regions) and a microstructure in the inside of the steel sheet other than the surface regions (hereinafter, called inner region), where the microstructure in the inner region is interposed between the microstructures of the surface regions on the upper and lower surface sides of the steel sheet. While the microstructure in the inner region is controlled to be substantially a bainite single phase, the microstructures in the surface regions are controlled to include mainly a ferrite phase such that the microstructures in the surface regions are softer than that in the inner region in order to increase the bending workability of a hot-rolled steel sheet while keeping a high strength of 980 MPa or more in terms of tensile strength TS.

The microstructure in the surface regions is controlled to include mainly a ferrite phase in an amount of 80% or more in terms of area fraction and the balance being at least one selected from a bainite phase, a martensite phase, and a retained austenite phase in an amount of 0% or more and 20% or less in terms of area fraction.

### Area fraction of a ferrite phase in the surface regions: 80% or more

In the case where the area fraction of a ferrite phase, which is a main phase, in the surface regions is less than 80%, since there is a decrease in the bending workability of a hot-rolled steel sheet, it is difficult to achieve a tensile strength of 980 MPa or more and satisfactory bending workability. Therefore, the area fraction of a ferrite phase in the surface regions is set to be 80% or more, preferably 90% or more, or it may be 100% (which means a ferrite single phase).

Total area fraction of a bainite phase, a martensite phase, and a retained austenite phase in the surface regions: 0% or more and 20% or less

In the surface regions, microstructures other than a ferrite phase are at least one of a bainite phase, a martensite phase, and a retained austenite phase, and the total area fraction of these phases is 0% or more and 20% or less, or preferably 10% or less.

On the other hand, the microstructure of the inner region is controlled to include mainly a bainite phase in an amount of more than 90% in terms of area fraction and the balance being at least one selected from the group of a ferrite phase, a martensite phase, and a retained austenite phase in an amount of 0% or more and less than 10% in terms of area fraction.

### Area fraction of a bainite phase in the inner region: more than 90%

In the case where the area fraction of a bainite phase, which is a main phase, in the inner region is 90% or less, since there is a decrease in the strength and bending workability of a hot-rolled steel sheet, it is not possible to stably achieve the desired high strength and satisfactory bending workability. Therefore, the area fraction of a bainite phase in the inner region is set to be more than 90%, preferably 95% or more, and most preferably 100% (which means a bainite single phase).

Total area fraction of a ferrite phase, a martensite phase, and a retained austenite phase in the inner region: 0% or more and less than 10%

In the inner region, microstructures other than a bainite phase are one or more of a ferrite phase, a martensite phase, and a retained austenite phase, and the total area fraction of these phases is 0% or more and less than 10%, or preferably 5% or less.

The proportions of the surface regions in the thickness direction of the steel sheet: 1.0% or more and 5.0% or less of the whole thickness respectively from the upper and lower surfaces of the steel sheet

In the present invention, by optimizing the proportions of the surface regions to the whole hot-rolled steel sheet in order to achieve a satisfactory strength-bending workability balance of the hot-rolled steel sheet, a hot-rolled steel sheet having a tensile strength of 980 MPa or more and being excellent in terms of bending workability is obtained. In the case where the depths of the surface regions in the thickness direction of the steel sheet are less than 1.0% of the whole thickness respectively from the upper and lower surfaces of the steel sheet, it is difficult to provide a hot-rolled steel sheet with satisfactory bending workability, and a crack tends to occur when the hot-rolled steel sheet is subjected to bending work. On the other hand, in the case where the depth of the soft surface regions, which increases bending workability, in the thickness direction of the steel sheet is more than 5.0% of the whole thickness respectively from the upper and lower surfaces of the steel sheet, since there is a decrease in the strength of the whole hot-rolled steel sheet, it is not possible to achieve the desired tensile strength of 980 MPa or more. Therefore, the proportions of the surface regions in the thickness direction of the steel sheet is set to be 1.0% or more and 5.0% or less, or preferably 1.5% or more and 3.5% or less, of the whole thickness respectively from the upper and lower surfaces of the steel sheet.

As described above, by specifying a chemical composition and a microstructure, it is possible to obtain a high-strength hot-rolled steel sheet having a tensile strength TS of 980 MPa or more and bending workability which is required for materials for automotive parts. Here, although there is no particular limitation on the thickness of the hot-rolled steel sheet according to the present invention, it is preferable that the thickness be about 3.2 mm or more and 14 mm or less.

Hereafter, the preferable method for manufacturing the hot-rolled steel sheet according to the present invention will be described.

The present invention is characterized as including heating a steel material having the chemical composition described above in a temperature range of 1250°C or higher, then holding the heated steel material in the temperature range for 3600 seconds or more, performing hot rolling including rough rolling and finish rolling under the condition that the finish delivery temperature is 840°C or higher and 940°C or lower, starting cooling within 1.5 seconds after hot rolling has been finished, performing cooling at an average cooling rate of 25°C/s or more, and performing coiling at a coiling temperature of 350°C or higher and 500°C or lower. Here, in the description of a manufacturing method, "°C" represents a "surface temperature", unless otherwise noted.

There is no particular limitation on what method is used for manufacturing a steel material, and any of the common methods can be used for manufacturing molten steel having the chemical composition described above, using a converter and the like, and forming a steel material such as a slab, using a casting method such as a continuous casting method. Also, an ingot casting and blooming method may be used.

### Heating temperature of a steel material: 1250°C or higher

### Holding time of the steel material at the heating temperature: 3600 seconds or more

The heating temperature of the steel material and the holding time of the steel material at the heating temperature are important factors in the manufacturing conditions in the present invention. By heating a steel material such as a slab at a heating temperature of 1250°C or higher, and by holding the heated steel material in the heating temperature range of 1250°C or higher for 3600 seconds or more, since the surface layers of the steel material is decarburized, there is a decrease in the carbon concentration in the surface layers. As a result, since a ferrite phase is more likely to be formed in the surface regions of the steel material than in the inner region, it is possible to stably achieve the microstructure for a hot-rolled steel sheet described above.

In the steel material, almost all the carbonitride-forming elements such as Ti are present in the form of large-size carbonitrides. The presence of such large-size non-uniform carbonitrides causes a deterioration in the bending workability of a hot-rolled steel sheet. In order to make such large-size precipitates solid solutions formed before hot rolling process, it is necessary to limit the heating temperature of the steel material to 1250°C or higher, or preferably 1260°C or higher and 1350°C or lower. In addition, the holding time of the steel material in a temperature range of 1250°C or higher is set to be 3600 seconds or more, or preferably 4000 seconds or more. However, in the case where the holding time of the steel material in a temperature range of 1250°C or higher is excessively long, since there is an increase in scale generation amount, for example, biting of scale tends to occur in the subsequent hot rolling process, which results in concern that there may be a deterioration in the surface quality of a hot-rolled steel sheet. Therefore, it is preferable that the holding time be 7200 seconds or less.

Following heating and holding the steel material, hot rolling including rough rolling and finish rolling is performed on the steel material. There is no particular limitation on what conditions are used for the rough rolling as long as a desired size for a sheet bar is achieved. Following the rough rolling, finish rolling is performed. Here, it is preferable to perform descaling before finish rolling is performed or between the rolling stands in the middle of finish rolling.

### Finish delivery temperature: 840°C or higher and 940°C or lower

The finish delivery temperature is one of the important factors in the manufacturing conditions in the present invention. In the case where the finish delivery temperature is lower than 840°C, since there is an increase in the area fraction of a ferrite phase when rolling is performed for forming a dual phase of a ferrite phase and an austenite phase, it is difficult to achieve the desired microstructure described above for a hot-rolled steel sheet. On the other hand, in the case where the finish delivery temperature is excessively higher than 940°C, since there is an increase in hardenability due to the growth of austenite grains in the surface regions of the steel sheet, phases other than a ferrite phase such as a bainite phase tends to be formed, which makes it difficult to achieve the desired microstructure described above for a hot-rolled steel sheet. Therefore, the finish delivery temperature is set to be 840°C or higher and 940°C or lower, preferably 850°C or higher and 930°C or lower, or more preferably 860°C or higher and 920°C or lower.

### Average cooling rate: 25°C/s or more

Immediately after finish rolling has been performed, preferably within 1.5 seconds, accelerated cooling is started, cooling is stopped at a coiling temperature, and then, the hot-rolled steel sheet is coiled in a coil shape. In the case where the average cooling rate from the finish delivery temperature to the coiling temperature is less than 25°C/s, it is not possible to form sufficient amount of bainite phase in the inner region of a hot-rolled steel sheet. Therefore, the average cooling rate described above is set to be 25°C/s or more, or preferably 30°C/s or more. Although there is no particular limitation on the upper limit of the average cooling rate, since it is difficult to achieve the desired microstructure in the surface regions due to bainite transformation being promoted in the case where the average cooling rate is excessively large, it is preferable that the average cooling rate be 120°C/s or less. Here, the average cooling rate described above is the average cooling rate in terms of the surface temperature of a steel sheet.

Coiling temperature: 350°C or higher and 500°C or lower In the case where the coiling temperature is lower than 350°C, a martensite phase and a retained austenite phase, which are hard, tend to be formed in the inner region of a hot-rolled steel sheet. As a result, since it is not possible to achieve the desired microstructure, it is difficult to give a hot rolled microstructure the desired bending workability. On the other hand, in the case where the coiling temperature is higher than 500°C, since a ferrite phase tends to be formed in the inner region of a hot-rolled steel sheet, large-size pearlite phase and large-size martensite phase are formed, which results in a decrease in the strength and bending workability of a hot-rolled steel sheet. Considering the reasons described above, the coiling temperature is set to be 350°C or higher and 500°C or lower, or preferably 350°C or higher and 450°C or lower.

Here, in order to reduce the segregation of composition in steel at a continuous casting, for example, electromagnetic stirring (EMS) or light-reduction casting (IBSR) may be used in the present invention. By performing an electromagnetic stirring treatment, since equiaxial crystals are formed in the central portion in the thickness direction in a steel sheet, it is possible to reduce the segregation. In addition, in the case where light-reduction casting is performed, since the flow of molten steel in a non-solidified portion in a continuous cast slab is prevented, it is possible to reduce the segregation in the central portion in the thickness direction in a steel sheet. By using at least one of these treatments for reducing the segregation, it is possible to further raise the level of bending workability described below.

Here, after coiling has been performed, as is the case with common methods for manufacturing a hot-rolled steel sheet, temper rolling may be performed, or scale formed on the surface of a steel sheet may be removed by performing pickling. Moreover, a plating treatment such as hot dip galvanizing or electrogalvanizing or chemical conversion coating may be performed.

### EXAMPLES

Molten steels having the chemical compositions given in Table 1 were manufactured using a converter, and then slabs (steel materials) were manufactured using a continuous casting method. In the case of hot-rolled steel sheets other than hot-rolled steel sheet No. 1' composed of steel A given in Tables 1 through 3 described below, electromagnetic stirring (EMS) was performed in order to reduce the segregation of composition when continuous casting was performed. Subsequently, by heating and holding these steel materials under the conditions given in Table 2, by performing hot rolling including rough rolling and finish rolling under the conditions given in Table 2, by performing cooling under the conditions given in Table 2 after finish rolling had been performed, and by performing coiling at the coiling temperatures given in Table 2, hot-rolled steel sheets having the thicknesses given in Table 2 were manufactured.

Microstructure observation, a tensile test, and a bending test were performed on test pieces taken from the obtained hot-rolled steel sheets. Microstructure observation and the tests were performed using the following methods.

### (i) Microstructure observation

By taking a test piece for a scanning electron microscope (SEM) from the obtained hot-rolled steel sheet, by polishing a cross section in the thickness direction parallel to the rolling direction, by emergence of a microstructure using an etching solution (3%-nital solution), and by observing the vicinity of surface layers using a scanning electron microscope (SEM) at a magnification of 800 to 1500 times, surface regions were identified. Since a ferrite phase is observed more in surface regions than in an inner region, it is possible to distinguish surface regions from an inner region.

After the surface regions had been identified, by determining the depth of the region in which the surface region was formed on each of the upper and lower surface sides of the test piece (depth in the thickness direction from each of the upper and lower surfaces of the test piece), the proportion of the surface region which was formed on each of the upper and lower surfaces of the test piece in the thickness direction of the test piece (the thickness direction of the steel sheet) was determined. Specifically, by determining the depth d₁ of the region in which the surface region was formed on the upper surface side of the test piece (depth in the thickness direction from the upper surface of the test piece) and the depth d₂ of the region in which the surface region was formed on the lower surface side of the test piece (depth in the thickness direction from the lower surface of the test piece), by calculating the average value d (= (d₁ + d₂)/2) of these depths, and by calculating the ratio (d/t × 100 (%)) of the average value d to the total thickness t of the test piece (that is, the thickness of the hot-rolled steel sheet), the proportion of the surface region which had been formed on each of the upper and lower surface sides in the thickness direction of the test piece (the thickness direction of the steel sheet) was determined. The depths (d₁ and d₂) described above were determined based on the scale bars in the images obtained using a SEM at a magnification of 800 to 1500 times.

The area fractions of the each constituent phases of the surface region were determined by taking photographs using a SEM at a magnification of 3000 times in 5 fields of view at the central position in the depth direction of the surface region and the vicinity of the central position and by performing image analysis within the range of ±20 µm in the depth direction from the central position in order to quantify the area fractions of the constituent phases. The area fractions of the constituent phases of the inner region were determined by taking photographs using a SEM (scanning electron microscope) at a magnification of 3000 times in 5 fields of view each at a positon located at 1/4 of the thickness and at a positon located at 1/2 of the thickness and by performing image analysis in order to quantify the area fractions of the constituent phases.

### (ii) Tensile test

A tensile test was performed in accordance with a method prescribed in JIS Z 2241 (2011) on a JIS No. 5 tensile test piece (having a GL of 50 mm) which had been taken from the obtained hot-rolled steel sheet so that the tensile direction was at a right angle to the rolling direction in order to obtain yield strength (yield point) YP, tensile strength TS, and total elongation El.

### (iii) Bending test

After performing shearing work on the obtained hot-rolled steel sheet, a bending test piece of 20 mm × 150 mm was taken so that the longitudinal direction of the test piece was at a right angle to the rolling direction. A 180° bending test was performed on the test piece having a shear plane in accordance with a pressing bend method prescribed in JIS Z 2248 (2006). Here, by performing the test on three test pieces for each case, by defining a limit bending radius R (mm) as the minimum bending radius with which a crack did not occur, and by calculating an R/t value by dividing R by the thickness t (mm) of the hot-rolled steel sheet, bending workability of the hot-rolled steel sheet was evaluated based on the R/t value. In the present invention, a case where an R/t value was 0.50 or less was evaluated as a case of excellent bending workability.

Obtained results are given in Table 3.

**[Table 1]**

| Steel | Chemical Composition (mass%) Balance: Fe and Inevitable Impurities | | | | | | | | | | Note |
|---|---|---|---|---|---|---|---|---|---|---|---|
| | C | Si | Mn | P | S | Al | N | Ti | V | Other | |
| A | 0.11 | 0.6 | 2.4 | 0.021 | 0.0015 | 0.030 | 0.0031 | 0.15 | 0.24 | - | Example Steel |
| B | 0.18 | 0.8 | 2.0 | 0.014 | 0.0031 | 0.065 | 0.0078 | 0.12 | 0.20 | - | Example Steel |
| C | 0.07 | 0.8 | 2.2 | 0.015 | 0.0034 | 0.062 | 0.0034 | 0.10 | 0.15 | - | Comparative Steel |
| D | 0.14 | 1.0 | 2.4 | 0.015 | 0.0021 | 0.041 | 0.0043 | 0.09 | 0.15 | - | Example Steel |
| E | 0.13 | 1.2 | 1.8 | 0.023 | 0.0019 | 0.043 | 0.0032 | 0.08 | 0.15 | - | Example Steel |
| F | 0.14 | 0.2 | 1.9 | 0.022 | 0.0020 | 0.044 | 0.0053 | 0.09 | 0.25 | - | Comparative Steel |
| G | 0.15 | 0.7 | 2.1 | 0.046 | 0.0014 | 0.015 | 0.0047 | 0.11 | 0.20 | - | Example Steel |
| H | 0.12 | 0.9 | 3.3 | 0.023 | 0.0038 | 0.082 | 0.0040 | 0.15 | 0.22 | - | Example Steel |
| I | 0.13 | 0.6 | 4.0 | 0.016 | 0.0012 | 0.019 | 0.0057 | 0.15 | 0.15 | - | Comparative Steel |
| J | 0.14 | 2.5 | 1.1 | 0.012 | 0.0018 | 0.058 | 0.0061 | 0.06 | 0.25 | - | Example Steel |
| K | 0.13 | 0.5 | 1.9 | 0.021 | 0.0033 | 0.061 | 0.0049 | 0.20 | 0.20 | - | Comparative Steel |
| L | 0.16 | 0.8 | 2.3 | 0.037 | 0.0009 | 0.047 | 0.0060 | 0.09 | 0.05 | - | Comparative Steel |
| M | 0.11 | 0.7 | 1.8 | 0.014 | 0.0026 | 0.066 | 0.0052 | 0.10 | 0.15 | Nb: 0.08 | Example Steel |
| N | 0.11 | 0.6 | 2.2 | 0.011 | 0.0022 | 0.023 | 0.0043 | 0.10 | 0.11 | Ni: 0.15, Cr: 0.2 | Example Steel |
| O | 0.14 | 0.7 | 1.8 | 0.013 | 0.0032 | 0.071 | 0.0021 | 0.12 | 0.20 | Mo: 0.1 | Example Steel |
| P | 0.16 | 0.7 | 2.1 | 0.014 | 0.0021 | 0.038 | 0.0049 | 0.15 | 0.15 | B: 0.0007 | Example Steel |
| Q | 0.15 | 0.5 | 1.9 | 0.015 | 0.0009 | 0.023 | 0.0054 | 0.11 | 0.22 | Ca: 0.005 | Example Steel |
| R | 0.11 | 0.9 | 2.4 | 0.016 | 0.0011 | 0.033 | 0.0047 | 0.11 | 0.28 | REM: 0.003 | Example Steel |
| S | 0.15 | 0.7 | 2.3 | 0.028 | 0.0008 | 0.050 | 0.0061 | 0.09 | 0.18 | Cu: 0.1 | Example Steel |

**[Table 2]**

| Hot-rolled Steel Sheet No. | Steel | Hot Rolling Condition | | | | | Thickness t (mm) | Note |
|---|---|---|---|---|---|---|---|---|
| | | Slab Heating Temperaure (°C) | Holding Time *1(s) | Finish Delivery Temperature (°C) | Average Cooling Rate (°C/s) | Coiling Temperalure (°C) | | |
| 1 | A | 1280 | 3800 | 910 | 35 | 420 | 6 | Example Steel |
| 1' | | 1280 | 3800 | 910 | 35 | 420 | 6 | Example Steel |
| 2 | | 1260 | 4000 | 910 | 40 | 380 | 6 | Example Steel |
| 3 | B | 1260 | 3800 | 970 | 45 | 380 | 3.2 | Comparative Steel |
| 4 | | 1280 | 3800 | 920 | 45 | 400 | 3.2 | Example Steel |
| 5 | C | 1260 | 3800 | 920 | 35 | 400 | 8 | Comparative Steel |
| 6 | D | 1280 | 4000 | 890 | 40 | 390 | 4 | Example Steel |
| 7 | | 1200 | 3000 | 890 | 40 | 380 | 4 | Comparative Steel |
| 8 | E | 1260 | 4400 | 940 | 35 | 360 | 8 | Example Steel |
| 9 | | 1280 | 4200 | 800 | 35 | 410 | 8 | Comparative Steel |
| 10 | F | 1260 | 3800 | 910 | 40 | 370 | 6 | Comparative Steel |
| 11 | G | 1260 | 4000 | 920 | 45 | 390 | 3.2 | Example Steel |
| 12 | | 1280 | 3800 | 850 | 45 | 400 | 3.2 | Example Steel |
| 13 | H | 1260 | 4600 | 900 | 25 | 380 | 12 | Example Steel |
| 14 | | 1280 | 3800 | 930 | 25 | 520 | 12 | Comparative Steel |
| 15 | I | 1260 | 3600 | 870 | 30 | 410 | 8 | Comparative Steel |
| 16 | J | 1300 | 4000 | 900 | 25 | 440 | 10 | Example Steel |
| 17 | | 1280 | 3800 | 890 | 25 | 390 | 10 | Example Steel |
| 18 | K | 1250 | 4200 | 940 | 35 | 420 | 6 | Comparative Steel |
| 19 | L | 1260 | 4200 | 900 | 45 | 360 | 3.2 | Comparative Steel |
| 20 | M | 1280 | 3800 | 880 | 40 | 400 | 4 | Example Steel |
| 21 | N | 1260 | 4200 | 890 | 40 | 380 | 4 | Example Steel |
| 22 | O | 1260 | 4400 | 870 | 35 | 360 | 6 | Example Steel |
| 23 | P | 1280 | 4200 | 920 | 35 | 420 | 6 | Example Steel |
| 24 | Q | 1300 | 4000 | 920 | 35 | 370 | 6 | Example Steel |
| 25 | R | 1280 | 4600 | 940 | 30 | 400 | 8 | Example Steel |
| 26 | S | 1260 | 4600 | 890 | 30 | 390 | 8 | Example Steel |
| *1) Holding time at the slab heating temperature (s) | | | | | | | | |

**[Table 3]**

| Hot-rolled Steel Sheet No. | Steel | Proportion of Surface Region *3 (%) | Microstructure of Hot-rolled Steel Sheet *2 | | | | | | Mechanical Property of Hot-rolled Steel Sheet | | | | Note |
|---|---|---|---|---|---|---|---|---|---|---|---|---|---|
| | | | Surface Region | | Inner Region | | | | Yield Stress YP (MPa) | Tensile Strength TS (MPa) | Total Elongation EL L(%) | R/t *4 | |
| | | | | | Position Located at 1/4 of Thickness | | Position Located at 1/2 of Thickness | | | | | | |
| | | | Area Fraction of F Phase (%) | Other | Area Fraction of B Phase (%) | Other | Area Fraction of B Phase (%) | Other | | | | | |
| 1 | A | 2.0 | 83 | B | 92 | M, γ | 94 | M, γ | 864 | 1034 | 15.7 | 0.45 | Example Steel |
| 1' | | 2.1 | 84 | B | 92 | M, γ | 95 | M, γ | 865 | 1035 | 14.5 | 0.50 | Example Steel |
| 2 | | 1.6 | 85 | B, M | 94 | M, γ | 95 | M, γ | 920 | 1094 | 13.7 | 0.32 | Example Steel |
| 3 | B | 0.5 | 61 | B, M | 95 | M | 97 | M | 895 | 1042 | 11.2 | 0.65 | Comparative Steel |
| 4 | | 1.9 | 82 | B | 93 | M | 94 | M | 853 | 1012 | 13.0 | 0.39 | Example Steel |
| 5 | C | 2.3 | 86 | B | 92 | F | 94 | F | 805 | 958 | 17.3 | 0.43 | Comparative Steel |
| 6 | D | 2.6 | 84 | B | 93 | M | 94 | M | 837 | 997 | 14.1 | 0.32 | Example Steel |
| 7 | | 1.5 | 53 | B, M | 94 | M | 97 | M | 866 | 1012 | 12.5 | 0.54 | Comparative Steel |
| 8 | E | 1.4 | 82 | B | 95 | M, γ | 97 | M, γ | 867 | 1016 | 14.5 | 0.40 | Example Steel |
| 9 | | 3.6 | 94 | B | 79 | F | 83 | F | 761 | 941 | 20.5 | 0.35 | Comparative Steel |
| 10 | F | 0.3 | 33 | B, M | 94 | M | 97 | M | 856 | 992 | 13.2 | 0.56 | Comparative Steel |
| 11 | G | 1.3 | 81 | B, M | 93 | M | 96 | M | 852 | 1003 | 12.6 | 0.43 | Example Steel |
| 12 | | 3.9 | 88 | B | 91 | M | 93 | M | 818 | 988 | 14.5 | 0.25 | Example Steel |
| 13 | H | 1.8 | 92 | B | 100 | - | 100 | - | 993 | 1207 | 16.1 | 0.42 | Example Steel |
| 14 | | 1.4 | 53 | B, M, P | 77 | F, M, P | 81 | F. M, P | 879 | 1072 | 20.0 | 0.57 | Comparative Steel |
| 15 | I | 0.7 | 36 | B, M | 93 | M | 100 | M | 928 | 1096 | 14.7 | 0.67 | Comparative Steel |
| 16 | J | 3.6 | 85 | B | 91 | F, M | 92 | F, M | 823 | 1002 | 19.7 | 0.40 | Example Steel |
| 17 | | 2.8 | 87 | B | 92 | F, M | 94 | F, M | 896 | 1077 | 16.6 | 0.32 | Example Steel |
| 18 | K | 1.6 | 84 | B, M | 82 | F | 85 | F | 821 | 973 | 15.7 | 0.48 | Comparative Steel |
| 19 | L | 1.6 | 83 | B, M | 95 | F, M | 96 | M | 805 | 968 | 12.3 | 0.32 | Comparative Steel |
| 20 | M | 2.9 | 85 | B | 93 | F, M | 96 | M | 912 | 1093 | 13.3 | 0.30 | Example Steel |
| 21 | N | 2.0 | 81 | B, M | 94 | M | 94 | M | 869 | 1022 | 12.8 | 0.40 | Example Steel |
| 22 | O | 2.5 | 100 | - | 95 | M | 95 | M | 863 | 1037 | 14.9 | 0.22 | Example Steel |
| 23 | P | 2.3 | 83 | B | 92 | M | 92 | M | 891 | 1069 | 15.3 | 0.41 | Example Steel |
| 24 | Q | 2.2 | 81 | B | 94 | M | 94 | M | 863 | 1011 | 13.8 | 0.44 | Example Steel |
| 25 | R | 2.2 | 82 | B | 93 | M | 93 | M | 885 | 1050 | 15.5 | 0.46 | Example Steel |
| 26 | S | 1.6 | 88 | B, M | 93 | M, γ | 93 | M, γ | 836 | 1005 | 17.0 | 0.30 | Example Steel |

| | | | | | | | | | | | | | |
|---|---|---|---|---|---|---|---|---|---|---|---|---|---|
| *2) B: balnite, F: ferrite, M: martensite, γ: retained austenite *3) The proportion of a surface region formed on each of the upper and lower surface sides of a steel sheet in the thickness direction. *4) R: limit bending radius (mm), t: thickness (mm) | | | | | | | | | | | | | |

The hot-rolled steel sheets of the examples of the present invention were all hot-rolled steel sheets having the desired strength (980 MPa or more in terms of TS) and excellent bending workability (R/t value of 0.50 or less) . On the other hand, in the case of the hot-rolled steel sheets of the comparative examples, which were out of the range according to the present invention, the desired strength or satisfactory bending workability was not achieved.

The present application claims to the priority to Japanese Patent Application No. 2013-084449 filed on April 15, 2013, the disclosure of which is hereby incorporated herein in its entirety.

## Claims

1. A high-strength hot-rolled steel sheet, comprising:
a chemical composition consisting of, by mass%,
C: more than 0.1% and 0.2% or less, Si: 0.5% or more and 3.0% or less, Mn: 1.0% or more and 3.5% or less, P: 0.05% or less,
S: 0.004% or less, Al: 0.10% or less,
N: 0.008% or less, Ti: 0.05% or more and 0.15% or less,
V: more than 0.10% and 0.30% or less, optionally at least one selected from the group consisting of Nb: 0.003% or more and 0.2% or less, B: 0.0002% or more and 0.0015% or less, Cu: 0.005% or more and 0.2% or less, Ni: 0.005% or more and 0.2% or less, Cr: 0.005% or more and 0.2% or less, Mo: 0.005% or more and 0.2% or less, Ca: 0.0002% or more and 0.01% or less and REM: 0.0002% or more and 0.01% or less, and the balance being Fe and inevitable impurities,
surface regions including mainly a ferrite phase, and an inner region including mainly a bainite phase,
the surface regions having a microstructure including mainly a ferrite phase in an amount of 80% or more in terms of area fraction and the balance being at least one selected from a bainite phase, a martensite phase, and a retained austenite phase in an amount of 0% or more and 20% or less in terms of area fraction,
the inner region having a microstructure including mainly a bainite phase in an amount of more than 90% in terms of area fraction and the balance being at least one selected from a ferrite phase, a martensite phase, and a retained austenite phase in an amount of 0% or more and less than 10% in terms of area fraction, and
the proportions of the surface regions in the thickness direction of the steel sheet being 1.0% or more and 5.0% or less of the whole thickness respectively from the upper and lower surfaces of the steel sheet, and has a tensile strength of 980 MPa or more.

2. A method for manufacturing a high-strength hot-rolled steel sheet, the method comprising:
heating a steel slab having the chemical composition according to Claim 1 in a temperature range of 1250°C or higher,
holding the heated steel slab in the temperature range for 3600 seconds or more,
performing hot rolling including rough rolling and finish rolling under the condition that the finish delivery temperature is 840°C or higher and 940°C or lower,
starting cooling within 1.5 seconds after hot rolling has been performed,
performing cooling at an average cooling rate of 25°C/s or more, and
performing coiling at a coiling temperature of 350°C or higher and 500°C or lower.

## Patentansprüche

1. Hochfestes warmgewalztes Stahlblech, umfassend:
eine chemische Zusammensetzung, bestehend aus, angegeben in Masse-%, C: mehr als 0,1 % und 0,2 % oder weniger, Si: 0,5 % oder mehr und 3,0 % oder weniger, Mn: 1,0 % oder mehr und 3,5 % oder weniger, P: 0,05 % oder weniger, S: 0,004 % oder weniger, Al: 0,10 % oder weniger, N: 0,008 % oder weniger, Ti: 0,05 % oder mehr und 0,15 % oder weniger, V: mehr als 0,10 % und 0,30 % oder weniger, gegebenenfalls wenigstens einem, ausgewählt aus der Gruppe bestehend aus Nb: 0,003 % oder mehr und 0,2 % oder weniger, B: 0,0002 % oder mehr und 0,0015 % oder weniger, Cu: 0,005 % oder mehr und 0,2 % oder weniger, Ni: 0,005 % oder mehr und 0,2 % oder weniger, Cr: 0,005 % oder mehr und 0,2 % oder weniger, Mo: 0,005 % oder mehr und 0,2 % oder weniger, Ca: 0,0002 % oder mehr und 0,01 % oder weniger und REM: 0,0002 % oder mehr und 0,01 % oder weniger, und wobei der Rest Fe und unvermeidbare Verunreinigungen sind,
Oberflächenregionen, die hauptsächlich eine Ferritphase einschließen, und eine innere Region, die hauptsächlich eine Bainitphase einschließt,
wobei die Oberflächenregionen eine Mikrostruktur aufweisen, die hauptsächlich eine Ferritphase in einer Menge von 80 % oder mehr, bezogen auf den Flächenanteil, einschließt, und wobei der Rest wenigstens eine Phase, ausgewählt aus einer Bainitphase, einer Martensitphase und einer Restaustenitphase, in einer Menge von 0 % oder mehr und 20 % oder weniger, bezogen auf den Flächenanteil, ist,
wobei die innere Region eine Mikrostruktur aufweist, die hauptsächlich eine Bainitphase in einer Menge von mehr als 90 %, bezogen auf den Flächenanteil, einschließt, und wobei der Rest wenigstens eine Phase, ausgewählt aus einer Ferritphase, einer Martensitphase und einer Restaustenitphase, in einer Menge von 0 % oder mehr und weniger als 10 %, bezogen auf den Flächenanteil, ist, und
wobei die Anteile der Oberflächenregionen in der Dickenrichtung des Stahlblechs 1,0 % oder mehr und 5,0 % oder weniger der Gesamtdicke von den oberen bzw. unteren Oberflächen des Stahlblechs betragen, und eine Zugfestigkeit von 980 MPa oder mehr aufweist.

2. Verfahren zum Herstellen eines hochfesten warmgewalzten Stahlblechs, wobei das Verfahren umfasst:
das Erwärmen einer Stahlbramme mit der chemischen Zusammensetzung gemäß Anspruch 1 in einem Temperaturbereich von 1250 °C oder höher,
das Halten der erwärmten Stahlbramme in dem Temperaturbereich für 3600 Sekunden oder mehr,
das Durchführen eines Warmwalzens einschließlich Vorwalzen und Fertigwalzen unter der Bedingung, dass die Temperatur nach dem Fertigwalzen (finish delivery temperature) 840 °C oder höher und 940 °C oder niedriger ist,
das Beginnen eines Kühlens innerhalb von 1,5 Sekunden, nachdem das Warmwalzen durchgeführt worden ist,
das Durchführen des Kühlens mit einer mittleren Kühlgeschwindigkeit von 25 °C/s oder mehr, und
das Durchführen eines Aufwickelns bei einer Wickeltemperatur von 350 °C oder höher und 500 °C oder niedriger.

## Revendications

1. Tôle d'acier laminée à chaud de haute résistance, comprenant :
une composition chimique constituée, en % en masse, de
C : plus de 0,1 % et 0,2 % ou moins, Si : 0,5 % ou plus et 3,0 % ou moins, Mn : 1,0 % ou plus et 3,5 % ou moins, P : 0,05 % ou moins, S : 0,004 % ou moins, Al : 0,10 % ou moins, N : 0,008 % ou moins, Ti : 0,05 % ou plus et 0,15 % ou moins,
V : plus de 0,10 % et 0,30 % ou moins, éventuellement au moins un élément choisi dans le groupe constitué de Nb : 0,003 % ou plus et 0,2 % ou moins, B : 0,0002 % ou plus et 0,0015 % ou moins, Cu : 0,005 % ou plus et 0,2 % ou moins,
Ni : 0,005 % ou plus et 0,2 % ou moins, Cr : 0,005 % ou plus et 0,2 % ou moins,
Mo : 0,005 % ou plus et 0,2 % ou moins, Ca : 0,0002 % ou plus et 0,01 % ou moins et terres rares : 0,0002 % ou plus et 0,01 % ou moins, le reste étant du fer et des impuretés inévitables,
des régions de surface incluant principalement une phase ferrite et une région intérieure incluant principalement une phase bainite,
les régions de surface ayant une microstructure incluant principalement une phase ferrite en une quantité de 80 % ou plus en termes de fraction surfacique et le reste étant au moins l'une choisie parmi une phase bainite, une phase martensite et une phase austénite résiduelle en une quantité de 0 % ou plus et 20 % ou moins en termes de fraction surfacique,
la région intérieure ayant une microstructure incluant principalement une phase bainite en une quantité de plus de 90 % en termes de fraction surfacique et le reste étant au moins l'une choisie parmi une phase ferrite, une phase martensite et une phase austénite résiduelle en une quantité de 0 % ou plus et moins de 10 % en termes de fraction surfacique, et
les proportions des régions de surface dans le sens de l'épaisseur de la tôle d'acier étant respectivement de 1,0 % ou plus et 5,0 % ou moins de l'épaisseur totale depuis les surfaces supérieure et inférieure de la tôle d'acier, et ayant une résistance à la traction de 980 MPa ou plus.

2. Procédé de fabrication d'une tôle d'acier laminée à chaud de haute résistance, le procédé comprenant :
le chauffage d'une brame d'acier ayant la composition chimique selon la revendication 1 dans une plage de température de 1250 °C ou plus,
le maintien de la brame d'acier chauffée dans la plage de température pendant 3600 secondes ou plus,
la réalisation d'un laminage à chaud incluant un laminage de dégrossissage et un laminage de finissage suivant la condition selon laquelle la température en sortie de finissage est de 840 °C ou plus et 940 °C ou moins,
le démarrage d'un refroidissement dans un délai de 1,5 seconde après que le laminage à chaud a été réalisé,
la réalisation d'un refroidissement à une vitesse de refroidissement moyenne de 25 °C/s ou plus, et
la réalisation d'un enroulement à une température d'enroulement de 350 °C ou plus et 500 °C ou moins.
